# EUROPÄISCHE PATENTSCHRIFT

(11) **EP 1 698 851 B1**
(45) Veröffentlichungstag und Bekanntmachung des Hinweises auf die Patenterteilung: **15.10.2008**
(21) Anmeldenummer: 06004178.7
(22) Anmeldetag: 02.03.2006
(51) Int. Cl.: F41H 5/22, F16D 11/14

(54) **Vorrichtung zum Öffnen und Schließen eines Lukendeckels, insbesondere einer Schiebeluke an einem Kampffahrzeug**
Device for opening and closing the cover of a sliding hatch of an armoured vehicle, in particular a tank.
Dispositif pour l'ouverture et la fermeture d'un couvercle d'une trappe d'un véhicule de combat, en particulier un char.

(30) Priorität: 05.03.2005 DE 202005003541 U
(43) Veröffentlichungstag der Anmeldung: 06.09.2006
(73) Patentinhaber: Krauss-Maffei Wegmann GmbH & Co. KG, 80997 München (DE)
(72) Erfinder: Fehr, Michael, 34590 Wabern (DE)
(74) Vertreter: Feder, Wolf-Dietrich

(56) Entgegenhaltungen:
- EP-A- 1 150 090
- US-A- 5 535 869

## Beschreibung

Die Erfindung betrifft eine Vorrichtung zum Öffnen und Schließen eines Lukendeckels, insbesondere einer Schiebeluke, an einem Kampffahrzeug mit den Merkmalen aus dem Oberbegriff des Patentanspruchs 1. Derartige Vorrichtungen sind an sich bekannt und beispielsweise in DE 42 40 140 A1 und DE 195 04 922 A1 beschrieben. Bei Schiebeluken besteht im Allgemeinen die Gefahr dass, wenn sich das Fahrzeug beispielsweise in einer Schräglage befindet, der schwere Lukendeckel der Schiebeluke unerwünschte Eigenbewegungen durchführen kann. Solche Eigenbewegungen müssen vermieden werden. Allerdings soll der Lukendeckel über eine manuelle Betätigungsvorrichtung auch bei größeren Schräglagen des Kampffahrzeuges mit zumutbaren Kraftaufwand geöffnet und geschlossen werden können, und zwar sowohl aus dem Innenraum des Fahrzeugs als auch von außen.

Bisher wurde bei derartigen Vorrichtungen als automatische Brems- und Arretiervorrichtung entweder ein innerhalb des Getriebes auf der Abtriebsseite angeordneter Schneckentrieb oder eine Klemmrollen-Lastmomentsperre eingesetzt. Eine Vorrichtung zum Öffnen und Schließen eines Lukendeckels, welche eine solche Klemmrollen-Lastmomentsperre aufweist, wird in EP 1 150 090 A2 beschrieben.

Die zwei unterschiedlichen Ausführungsarten weisen allerdings beide Nachteile auf. Die Verwendung des Schneckentriebes ist in der Konstruktion relativ teuer und erfordert einen großen Einbauraum. Ferner wird bedingt durch kleine Steigungswinkel nur ein geringer Wirkungsgrad im Vortrieb erreicht, wodurch erhöhte Antriebsleistungen benötigt werden. Die Verwendung einer Klemmrollen-Lastmomentsperre bietet gegenüber der Verwendung eines Schneckentriebs u.a. die Vorteile, dass im Vortrieb auf Grund der formschlüssigen Bewegungsübertragung ein höherer Wirkungsgrad erzielt wird und die Konstruktion kleiner dimensioniert werden kann. Ferner ist es über eine einfache Konstruktion möglich, dass über Betätigungsvorrichtungen die Luke sowohl aus dem Fahrzeuginneren als auch von außen geöffnet und geschlossen wird. Dies wird erreicht durch eine Parallelführung von einer Antriebswelle, an deren Enden die Betätigungsvorrichtungen angeschlossen werden, und einer Abtriebswelle, wobei die Antriebswelle durch das Gehäuse des Getriebes hindurchgeführt wird. Die Abtriebswelle wird als Hohlwelle ausgebildet, durch welche die Antriebswelle hindurchgeführt ist.

Der Erfindung liegt die Aufgabe zu Grunde, eine Vorrichtung mit den Merkmalen aus dem Oberbegriff des Patentanspruchs 1 so auszugestalten, dass sie bei gesteigerter Zuverlässigkeit und Lebensdauer konstruktiv einfach und kostengünstig aufgebaut werden kann.

Die Lösung der Aufgabe erfolgt erfindungsgemäß mit den Merkmalen aus dem kennzeichnenden Teil des Patentanspruchs 1. Vorteilhafte Weiterbildungen sind in den abhängigen Ansprüchen beschrieben.

Bei der erfindungsgemäßen Vorrichtung wird sichergestellt, dass über die formschlüssige Bewegungsübertragung ein hoher Wirkungsgrad erreicht wird, da die Abtriebswelle nur im Bedarfsfall reibschlüssig sicher arretiert bzw. gebremst wird.
Die erfindungsgemäße Vorrichtung weist zu diesem Zweck eine Bremsnabe auf, welche im unbewegten Zustand der Dachluke federkraftbeaufschlagt eine Bremswirkung ausübt. Die Vorrichtung kann derart eingestellt werden, dass ein solches Drehmoment, wie beispielsweise von der Eigenbewegung des Lukendeckels erzeugt, nicht ausreicht, um die Bremskraft zu überwinden. Ein Drehmoment, welches manuell über die Betätigungsvorrichtungen erzeugt wird, muss hingegen nicht die Bremskraft, sondern im wesentlichen nur die Federkraft überwinden. Die erfindungsgemäße Vorrichtung ist nun derart ausgebildet, dass in diesem Fall die Bremsnabe über Kurvenführungen entgegen der Kraft der Federn angehoben wird, wodurch die Bremswirkung aufgehoben wird. Nach Beendigung der Lukenbewegung geht die Bremsnabe automatisch vom angehobenen Zustand in den abgesenkten Zustand zurück, wodurch die Bremswirkung wieder eintritt. Die Bremsnabe kann in vorteilhafter Weise aus einem Gleitwerkstoff oder aus Stahl hergestellt sein.

Im folgenden wird anhand der beigefügten Zeichnungen ein mögliches Ausführungsbeispiel für eine Vorrichtung nach der Erfindung näher erläutert.

Es zeigen:
- Fig. 1: eine Schnittzeichnung der Vorrichtung mit fehlendem Getriebe-Gehäusedeckel
- Fig. 2: eine Schnittzeichnung der Vorrichtung mit fehlendem Getriebe-Gehäusedeckel in der zu Fig. 1 gegenüberliegenden Ansicht
- Fig. 3: eine isometrische, teilweise aufgeschnittene Darstellung der Vorrichtung mit fehlendem Getriebe-Gehäusedeckel
- Fig. 4: eine isometrische, teilweise aufgeschnittene Darstellung der Vorrichtung mit fehlender Stellhülse
- Fig. 5: eine isometrische, teilweise aufgeschnittene Darstellung der Vorrichtung mit fehlender Bremsnabe und fehlendem Getriebe-Gehäusedeckel
- Fig. 6: eine isometrische Darstellung der Vorrichtung mit fehlendem Getriebe-Gehäusedeckel
- Fig. 7: eine isometrische Darstellung der Vorrichtung in der Aufsicht
- Fig. 8: eine schematische Darstellung der Bremsnabe und Stetlhülse im nicht angehobenen Zustand der Bremsnabe
- Fig. 9: eine schematische Darstellung der Bremsnabe und Stellhülse im angehobenen Zustand der Bremsnabe

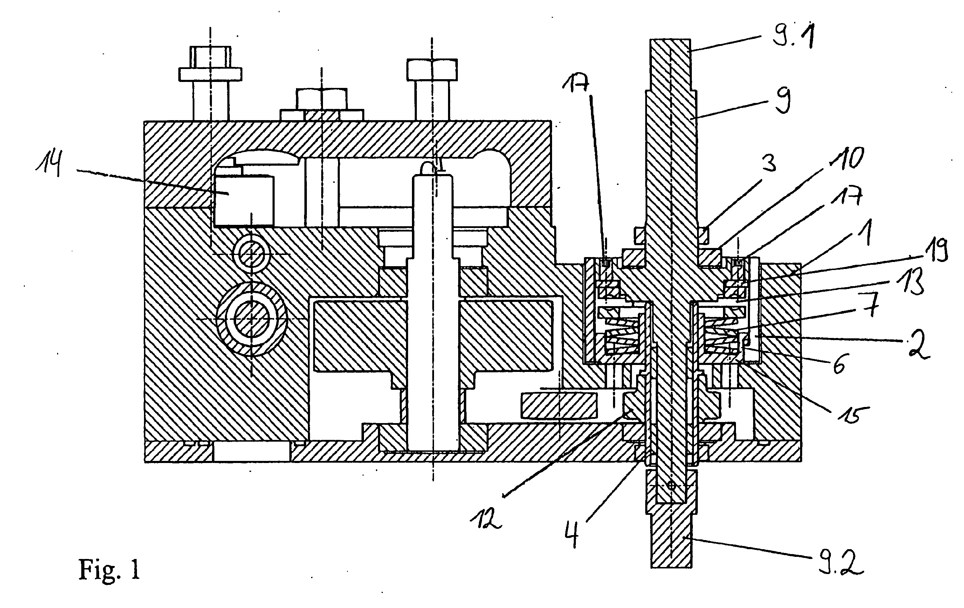

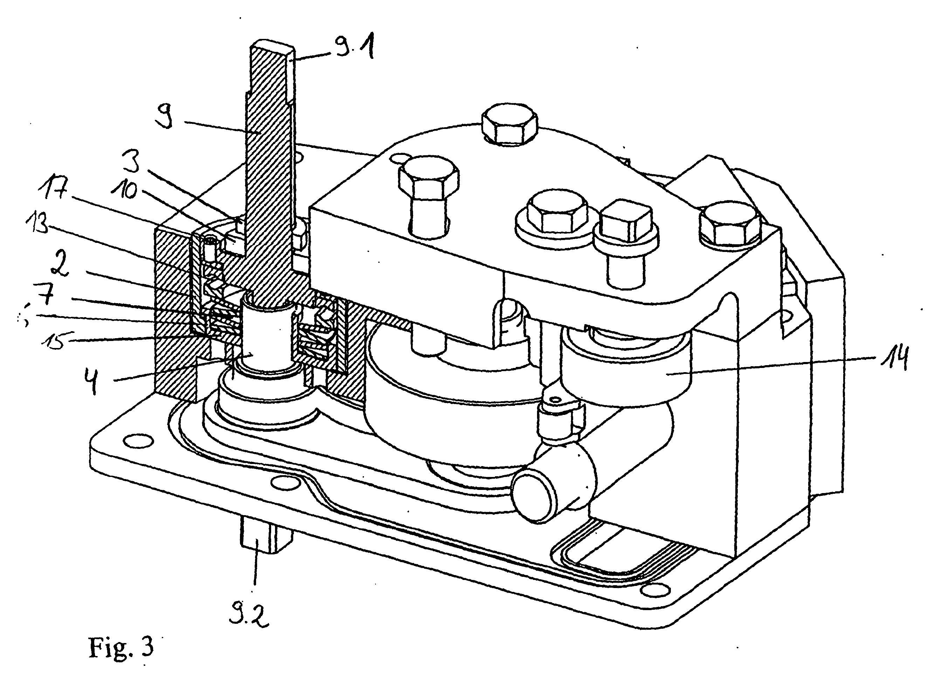

Es werden im folgenden von den in den Fig. 1 bis 7 dargestellten Bauteilen nur diejenigen näher erläutert, die für die Funktionsweise der Vorrichtung, insbesondere des Getriebes, von besonderer Bedeutung sind. Die Schiebeluke selbst mit dem Lukendeckel und der am Lukendeckel ange-ordneten Zahnstange sind nicht dargestellt. Bezüglich dieser Ausbildung wird auf die DE 42 40 140 A1 und DE 195 04 922 A1 verwiesen.

Die Figuren 1 bis 3 zeigen die Vorrichtung mit fehlendem Deckel 11 des Getriebegehäuses 1. Durch das Getriebegehäuse 1 ist eine Antriebswelle 9 so hindurchgeführt, dass ihre beiden Enden 9.1 und 9.2 zu beiden Seiten des Getriebes angeordnet sind.

Auf diese als Vierkant ausgebildete Enden 9.1 und 9.2 ist eine nicht dargestellte Betätigungsvorrichtung, beispielsweise eine Handkurbel oder ein Handrad, aufsteckbar.

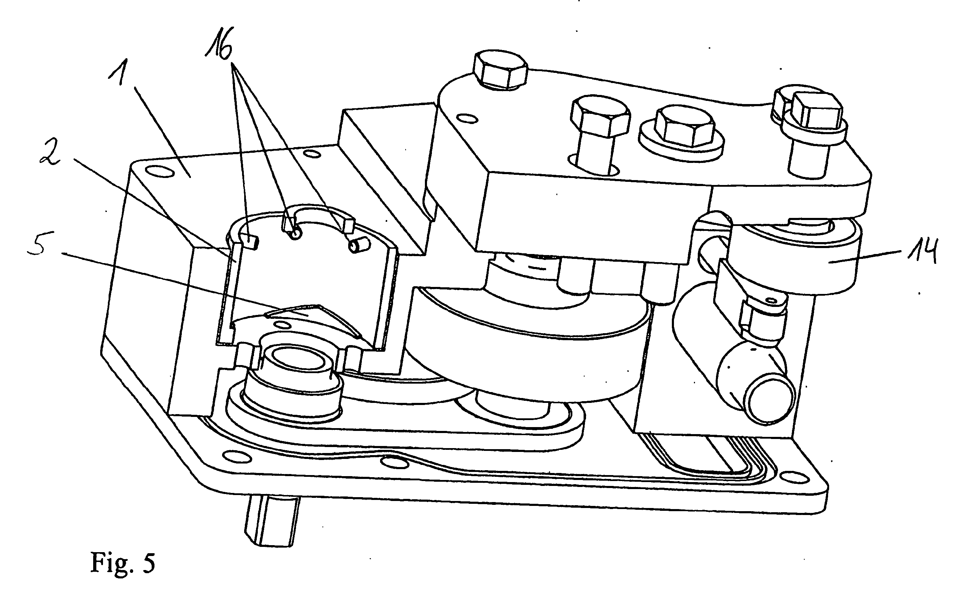

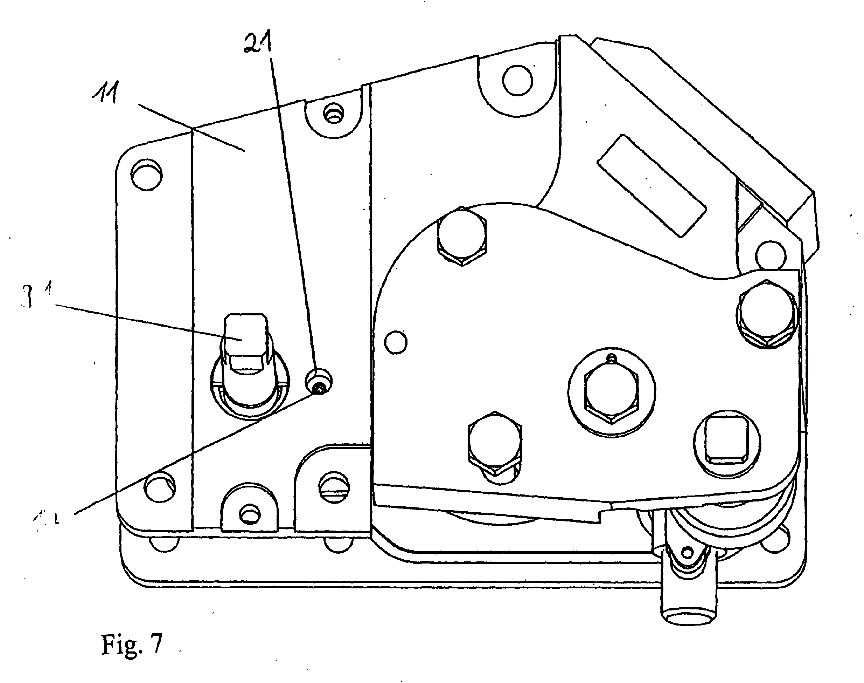

Die Antriebswelle 9 wird durch den in der Fig. 7 dargestellten Deckel 11 des Getriebegehäuses 1 durch eine Wellendichtung 3 und ein Kugellager 10 in das Getriebegehäuse 1 geführt. Auf der Antriebswelle 9 ist eine hohlzylinderförmige Stellhülse 2 angeordnet, welche durch Verschraubung formschlüssig mit der Antriebswelle 9 verbunden ist. Zu diesem Zweck weist die Stellhütse die in Fig. 5 dargestellten Durchführungen 16 auf. Auf der Innenseite der Stellhülse 2 weist diese entlang des Umfangs verteilte, vorstehende Kurvenführungen 5 auf. Eine solche Kurvenführung 5 ist in Fig. 5 dargestellt.

Die Antriebswelle 9 wird durch eine Hohlwelle 4 hindurchgeführt. Von der Hohlwelle 4 wird über ein Getriebe-Antriebsritzet 12 das Drehmoment über ein Zahnrad 20 und nicht näher beschriebene Stirnräder, die ein Untersetzungsgetriebe bilden, auf das Abtriebsritzel 14 des Untersetzungsgetriebes übertragen, welches in die nicht dargestellte Zahnstange des Lukendeckels eingreift.

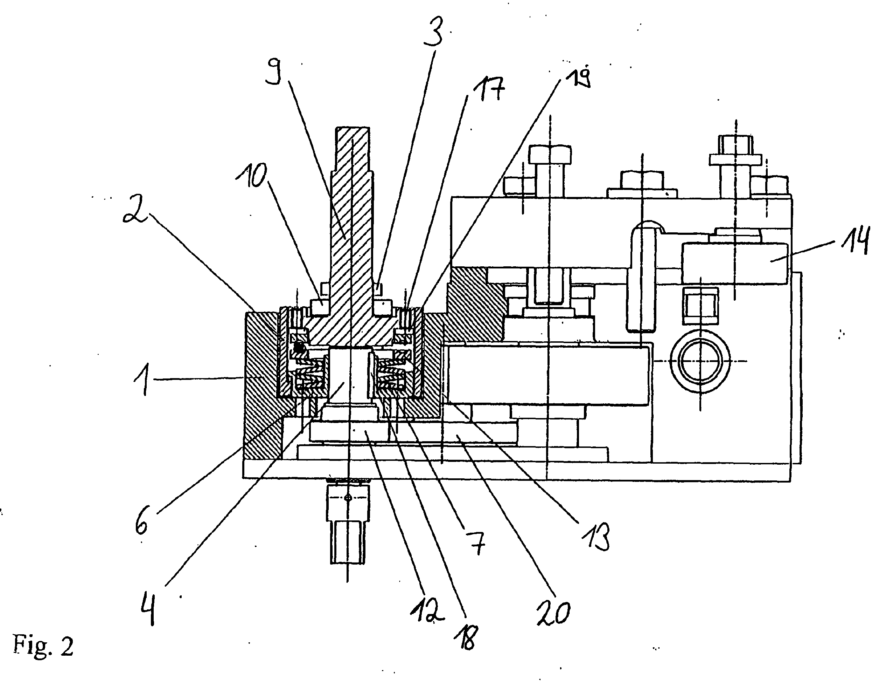

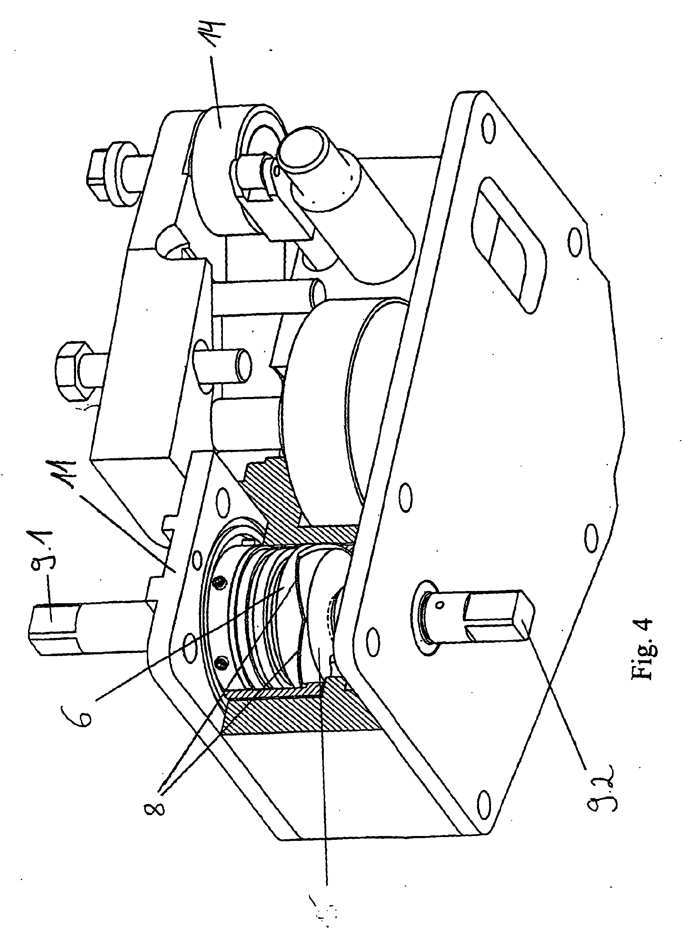

Auf der Hohlwelle 4 ist eine Bremsnabe 6 angeordnet, welche, wie in Fig. 2 dargestellt, über eine Passfeder 18 formschlüssig mit der Hohlwelle 4 verbunden ist. Die Bremsnabe 6 weist an ihrer Unterseite eine ebene Abschlussfläche 15 auf, welche im nicht bewegten Zustand durch die Kraft von Tellerfedern 7 gegen das Gehäuse 1 gedrückt wird. Durch diese Reibfläche wird die Bremswirkung der Vorrichtung bewirkt. Auf der Außenseite der Bremsnabe 6 weist diese entlang des Umfangs verteilte, vorstehende und in Fig. 4 dargestellte Kurvenführungen 8 auf. Diese Kurvenführungen 8 der Bremsnabe 6 sind spiegelsymmetrisch zu den Kurvenführungen 5 der Stellhülse 2 ausgebildet. Die Kurvenführungen 5 und 8 der Bremsnabe 6 und der Stellhülse 2 wirken derart zusammen, dass eine Drehbewegung der Bremsnabe 6 oder der Stellhülse 2 ein Anheben der Bremsnabe 6 entgegen der Kraft der Tellerfedern 7 bewirkt. Die Bremsnabe 6 hebt sich, bis sie gegen ein Axialkugellager 13 anschlägt, wodurch die Translationsbewegung der Bremsnabe 2 beendet wird. Anschließend vollzieht die Bremsnabe ausschließlich eine Rotationsbewegung, wodurch das Drehmoment über die Kurvenführungen 5 und 8 von der Bremsnabe 6 auf die Stellhülse 2 (bzw. umgekehrt) übertragen wird. Die Rotationsbewegung erfolgt nun, da die Bremsnabe angehoben ist, nicht mehr gebremst, wodurch ein hoher Wirkungsgrad erzielt wird.

Die Kurvenführungen 5 und 8 weisen jeweils ein ansteigende und eine dazu symmetrisch abfallende Flanke auf, wodurch bei beiden Drehrichtungen, d.h. in Öffnungs- und in Schließrichtung, die gewünschte Wirkung erzielt wird.
Der Steigungswinkel der Flanken soll sich vorteilhafterweise im Bereich von 10° bis 20°befinden, damit die Bremsnabe 6 bei Beendigung einer Drehbewegung, durch die Kraft der Tellerfedern 7 bewirkt, aus dem angehobenen Zustand, entlang Kurvenführungen 8 abgleitend, automatisch in den abgesenkten Zustand zurückgehen kann.

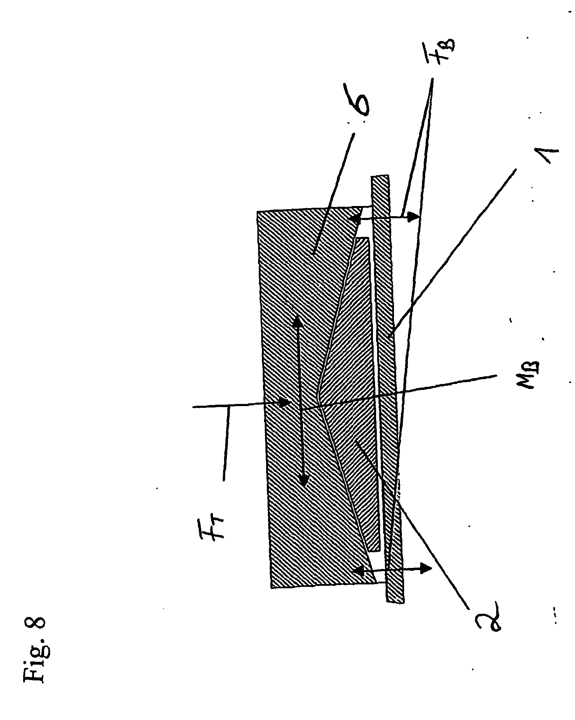

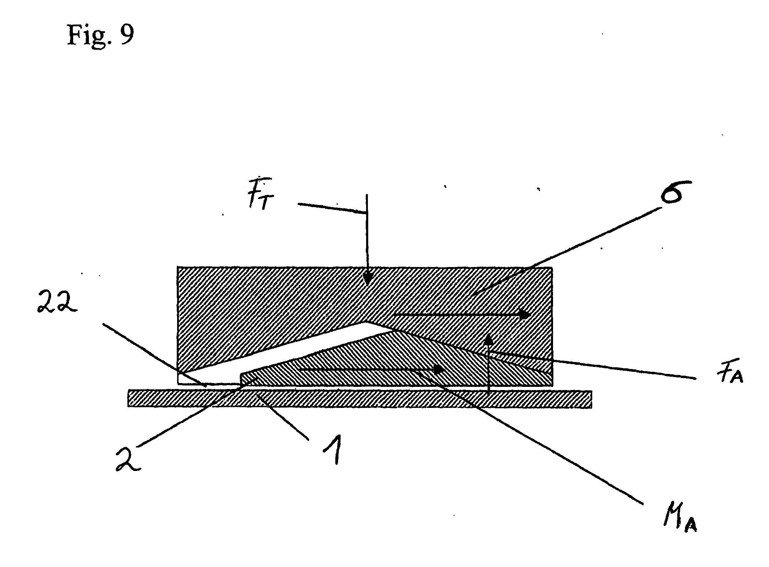

In den Fig. 8 und 9 sind zur Erläuterung der Wirkungsweise die wirkenden Kräfte und Drehmomente der Bremsnabe 6 und der Stellhülse 2 im nicht angehobenen Zustand der Bremsnabe (Fig. 8) und im angehobenen Zustand der Bremsnabe (Fig. 9), in dem ein Spalt 22 zwischen der Bremsnabe 6 und der Stellhülse 2 vorliegt, dargestellt.

Es bezeichnen hierbei
F_{T}: Kraft der Tellerfedern
F_{B}: Bremskraft
M_{B}: Bremsmoment
F_{A}: Ausrückkraft
M_{A}: Drehmoment von der Antriebsachse kommend

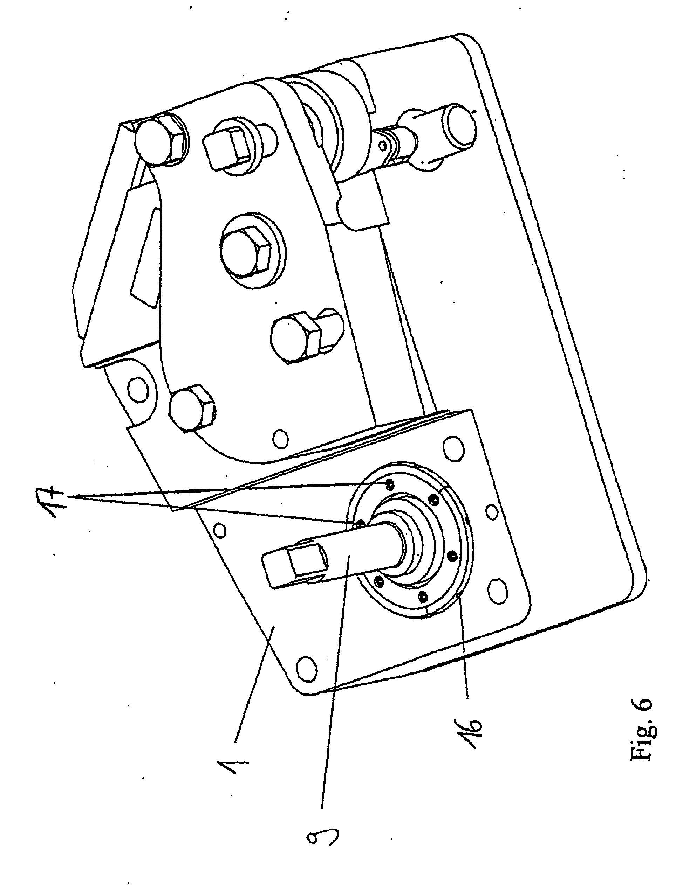

Die Vorspannung der Tellerfedern 7 kann mittels Stellschrauben 17 über die Druckscheibe 19 vom Servicepersonal angepasst werden. Die Stellschrauben sind hierbei, wie in Fig. 6 dargestellt, gleichmäßig entlang des Umfanges verteilt. Die Stellschrauben 17 können, wie in Fig. 7 beispielhaft dargestellt, von außen durch eine Öffnung 21 am Deckel 11 des Getriebegehäuses 1 hindurch zugänglich gemacht werden. Somit kann die Vorrichtung an beispielsweise veränderte Umweltbedingungen oder aufgetretene Verschleißerscheinungen angepasst werden.

## Patentansprüche

1. Vorrichtung zum Öffnen und Schließen eines Lukendeckels, insbesondere einer Schiebeluke an einem Kampffahrzeug, wobei am Lukendeckel eine Zahnstange angeordnet ist, in die ein Abtriebsritzel (14) eines am Fahrzeug angeordneten, mit einer Betätigungsvorrichtung verbundenen Getriebes eingreift, wobei zwischen das Abtriebsritzel (14) und die Betätigungsvorrichtung eine automatische Brems- und Arretiervorrichtung eingeschaltet ist, die eine Abtriebswelle aufweist, **dadurch gekennzeichnet, dass** auf der Abtriebswelle eine mit ihr fest verbundene Bremsnabe (6) angeordnet ist, welche zumindest eine Kurvenführung (8) aufweist und in einer Stellhülse (2) angeordnet ist, und
• dass die Stellhülse (2) drehbar gelagert und axial nicht verschiebbar angeordnet ist und auf der Innenseite zumindest eine Kurvenführung (5) aufweist, welche derart mit der Kurvenführung (8) der Bremsnabe (6) zusammenwirkt, dass eine relative Drehbewegung zwischen der Bremsnabe (6) und der Stellhülse (2) ein Anheben der Bremsnabe (6) entgegen die Kraft von zumindest einer Feder (7) bewirkt, und
• dass die Bremsnabe (6) eine ebene Abschlussfläche (15) aufweist, welche im nicht angehobenen Zustand der Bremsnabe (6) federbelastet gegen das Getriebegehäuse (1) drückt, und
• dass das Getriebe eine Antriebswelle (9) aufweist, welche mit der Stellhülse (2) fest verbunden ist.

2. Vorrichtung nach Anspruch 1, **dadurch gekennzeichnet, dass** die zumindest eine Feder (7) als konzentrisch zur Abtriebswelle angeordnete Tellerfeder ausgebildet ist.

3. Vorrichtung nach Anspruch 1 oder 2, **dadurch gekennzeichnet, dass** die Kurvenführung (5) der Stellhülse (2) im nicht angehobenen Zustand der Bremsnabe (6) spiegelsymmetrisch zur Kurvenführung (8) der Bremsnabe (6) ist.

4. Vorrichtung nach einem der Ansprüche 1-3, **dadurch gekennzeichnet, dass** die Kurvenführungen (5, 8) der Bremsnabe (6) und der Stellhülse (2) eine symmetrisch zueinander ansteigende und absteigende Flanke aufweisen.

5. Vorrichtung nach Anspruch 4, **dadurch gekennzeichnet, dass** der Anstiegswinkel der Flanken der Kurvenführungen (5, 8) zwischen 10° und 20° liegt.

6. Vorrichtung nach einem der Ansprüche 1-5, **dadurch gekennzeichnet, dass** zumindest eine Stellschraube (17) derart angeordnet ist, dass über die Stellschraube (17) die Vorspannung der Feder (7) veränderbar ist.

7. Vorrichtung nach einem der Ansprüche 1-6, **dadurch gekennzeichnet, dass** die Antriebswelle (9) zur manuellen Betätigung an den äußeren Enden angeordnete Vierkante aufweist, auf die ein beispielsweise als Handhebel oder Handrad ausgebildetes Betätigungselement aufsteckbar ist und dass die Antriebswelle (9) durch die als Hohlwelle (4) ausgebildete Abtriebswelle hindurchführt.

8. Vorrichtung nach einem der Ansprüche 1-7, **dadurch gekennzeichnet, dass** die Abtriebswelle und die Bremsnabe (6) über eine Passfeder (18) miteinander verbunden sind.

9. Vorrichtung nach einem der Ansprüche 1-7, **dadurch gekennzeichnet, dass** die Abtriebswelle und die Bremsnabe (6) über eine Kerbverzahnung miteinander verbunden sind.

10. Vorrichtung nach einem der Ansprüche 1-9, **dadurch gekennzeichnet, dass** die Stellhülse (2) und die Antriebswelle (9) miteinander verstiftet oder verschraubt sind.

11. Vorrichtung nach einem der Ansprüche 1-10, **dadurch gekennzeichnet, dass** die Feder zwischen einem Axialkugellager (13), in welchem die Antriebswelle (9) drehbar gelagert ist, und der Bremsnabe (6) angeordnet ist.

12. Vorrichtung nach Anspruch 11, **dadurch gekennzeichnet, dass** im nicht angehobenen Zustand der Bremsnabe (6) ein Freiraum zwischen der Bremsnabe (6) und dem Axialkugellager (13) vorliegt.

13. Vorrichtung nach Anspruch 12, **dadurch gekennzeichnet, dass** im nicht angehobenen Zustand der Bremsnabe (6) ein Freiraum zwischen der Bremsnabe (6) und einem Absatz der Antriebswelle (9) vorliegt, und dass die Bremsnabe (6) im angehobenen Zustand an den Absatz der Antriebswelle (9) anschlägt.

## Claims

1. Device for opening and closing a hatch cover, in particular a sliding hatch, on a combat vehicle, wherein disposed on the hatch cover is a gear rack, into which engages an output pinion (14) of a gear unit, which is disposed on the vehicle and connected to an actuating device, wherein inserted between the output pinion (14) and the actuating device is an automatic braking- and locking device comprising an output shaft, **characterized in that** disposed on the output shaft and connected in a fixed manner thereto is a brake hub (6), which has at least one cam guide (8) and is disposed in an adjusting sleeve (2), and
• that the adjusting sleeve (2) is rotatably mounted and disposed in an axially non-displaceable manner and has at the inside at least one cam guide (5), which interacts in such a way with the cam guide (8) of the brake hub (6) that a relative rotational movement between the brake hub (6) and the adjusting sleeve (2) gives rise to a lifting of the brake hub (6) counter to the action of at least one spring (7), and
• that the brake hub (6) has a flat terminating surface (15), which in the non-lifted state of the brake hub (6) is pressed in a spring-loaded manner against the gear-unit housing (1), and
• that the gear unit comprises an input shaft (9), which is connected in a fixed manner to the adjusting sleeve (2).

2. Device according to claim 1, **characterized in that** the at least one spring (7) takes the form of a cup spring disposed concentrically with the output shaft.

3. Device according to claim 1 or 2, **characterized in that** the cam guide (5) of the adjusting sleeve (2) in the non-lifted state of the brake hub (6) is mirror-symmetrical relative to the cam guide (8) of the brake hub (6).

4. Device according to one of claims 1-3, **characterized in that** the cam guides (5, 8) of the brake hub (6) and of the adjusting sleeve (2) have an ascending and a descending flank that are symmetrical to one another.

5. Device according to claim 4, **characterized in that** the leading angle of the flanks of the cam guides (5, 8) is between 10° and 20°.

6. Device according to one of claims 1-5, **characterized in that** at least one adjusting screw (17) is disposed in such a way that the bias of the spring (7) is variable by means of the adjusting screw (17).

7. Device according to one of claims 1-6, **characterized in that** the input shaft (9) for manual actuation has disposed on the outer ends a square, onto which an actuating element designed for example as a hand lever or handwheel is mountable, and that the input shaft (9) extends through the output shaft designed as a hollow shaft (4).

8. Device according to one of claims 1-7, **characterized in that** the output shaft and the brake hub (6) are connected to one another by a splined key (18).

9. Device according to one of claims 1-7, **characterized in that** the output shaft and the brake hub (6) are connected to one another by groove toothing.

10. Device according to one of claims 1-9, **characterized in that** the adjusting sleeve (2) and the input shaft (9) are pinned or screwed to one another.

11. Device according to one of claims 1-10, **characterized in that** the spring is disposed between an axial ball bearing (13), in which the input shaft (9) is rotatably mounted, and the brake hub (6).

12. Device according to claim 11, **characterized in that** in the non-lifted state of the brake hub (6) there is a gap between the brake hub (6) and the axial ball bearing (13).

13. Device according to claim 1, **characterized in that** in the non-lifted state of the brake hub (6) there is a gap between the brake hub (6) and a shoulder of the input shaft (9), and that the brake hub (6) in the lifted state strikes against the shoulder of the input shaft (9).

## Revendications

1. Dispositif pour l'ouverture et la fermeture d'un couvercle d'une trappe, en particulier d'une trappe coulissante sur un véhicule de combat, une crémaillère étant disposée sur le couvercle de trappe, dans laquelle vient en prise un pignon de sortie (14) d'une transmission fixée au véhicule et reliée à un dispositif d'actionnement, un dispositif de freinage et de blocage automatique présentant un arbre de sortie étant intercalé entre le pignon de sortie (14) et le dispositif d'actionnement, **caractérisé en ce que** sur l'arbre de sortie est disposé un moyeu de frein (6) rigidement relié à ce dernier, qui présente au moins un guidage curviligne (8) et est disposé dans une douille de réglage (2), et
- **en ce que** la douille de réglage (2) est logée de manière à pouvoir pivoter et est disposée de manière à ne pas pouvoir coulisser axialement, et présente sur le côté intérieur au moins un guidage curviligne (5), qui co-agit avec le guidage curviligne (8) du moyeu de frein (6) de telle sorte qu'un mouvement de rotation relatif entre le moyeu de frein (6) et la douille de réglage (2) produit un soulèvement du moyeu de frein (6) à l'encontre de la force d'au moins un ressort (7), et
**en ce que** le moyeu de frein (6) présente une surface de fermeture plane (15) qui, à l'état non soulevé du moyeu de frein (6), prend appui contre le carter de transmission (1) en étant sollicitée par ressort, et
**en ce que** la transmission présente un arbre d'entraînement (9), lequel est rigidement relié à la douille de réglage (2).

2. Dispositif selon la revendication 1, **caractérisé en ce que** le un ressort au moins (7) est réalisé comme une rondelle-ressort disposée concentriquement par rapport à l'arbre de sortie.

3. Dispositif selon la revendication 1 ou 2, **caractérisé en ce que** le guidage curviligne (5) de la douille de réglage (2) est, à l'état non soulevé du moyeu de frein (6), symétrique au guidage curviligne (8) du moyeu de frein (6).

4. Dispositif selon l'une quelconque des revendications 1 à 3, **caractérisé en ce que** les guidages curvilignes (5, 8) du moyeu de frein (6) et de la douille de réglage (2) présentent un flanc ascendant et descendant symétriques l'un par rapport à l'autre.

5. Dispositif selon la revendication 4, **caractérisé en ce que** l'angle de montée des flancs des guidages curvilignes (5, 8) se situe entre 10° et 20°.

6. Dispositif selon l'une quelconque des revendications 1 à 5, **caractérisé en ce que** au moins une vis de réglage (17) est disposée de telle sorte que la précontrainte du ressort (7) peut être modifiée par la vis de réglage (17).

7. Dispositif selon l'une quelconque des revendications 1 à 6, **caractérisé en ce que** l'arbre de d'entraînement (9) pour l'actionnement manuel présente des carrés situés aux extrémités extérieures, sur lesquels un élément d'actionnement conçu par exemple sous forme de levier à main ou volant à main peut être emboîté et **en ce que** l'arbre d'entraînement (9) passe par l'arbre de sortie conçu sous forme d'arbre creux (4).

8. Dispositif selon l'une quelconque des revendications 1 à 7, **caractérisé en ce que** l'arbre de sortie et le moyeu de frein (6) sont reliés l'un à l'autre par l'intermédiaire d'une clavette parallèle (18).

9. Dispositif selon l'une quelconque des revendications 1 à 7, **caractérisé en ce que** l'arbre de sortie et le moyeu de frein (6) sont reliés l'un à l'autre par l'intermédiaire d'une denture conique (18).

10. Dispositif selon l'une quelconque des revendications 1 à 9, **caractérisé en ce que** la douille de réglage (2) et l'arbre d'entraînement (9) sont goujonnés ou vissés.

11. Dispositif selon l'une quelconque des revendications 1 à 10, **caractérisé en ce que** le ressort est disposé entre un roulement axial à billes (13), dans lequel l'arbre d'entraînement (9) est logé de manière à pouvoir pivoter, et le moyeu de frein (6).

12. Dispositif selon la revendication 11, **caractérisé en ce qu'**à l'état non soulevé du moyeu de frein (6), un espace libre est présent entre le moyeu de frein (6) et le roulement axial à billes (13).

13. Dispositif selon la revendication 12, **caractérisé en ce qu'**à l'état non soulevé du moyeu de frein (6), un espace libre est présent entre le moyeu de frein (6) et un décrochement de l'arbre d'entraînement (9), et **en ce que** le moyeu de frein (6) à l'état soulevé arrive en butée contre le décrochement de l'arbre d'entraînement (9).
